# EUROPÄISCHE PATENTSCHRIFT

(11) **EP 1 064 693 B1**
(45) Veröffentlichungstag und Bekanntmachung des Hinweises auf die Patenterteilung: **09.06.2004**
(21) Anmeldenummer: 99913183.2
(22) Anmeldetag: 23.02.1999
(51) Int. Cl.: H01Q 1/22, H01Q 1/44, H01Q 13/10, H02G 3/12

(54) **ELEKTRISCHE UNTERPUTZINSTALLATIONSEINHEIT MIT ANTENNE**
ELECTRIC FLUSH-MOUNTED INSTALLATION UNIT WITH AN ANTENNA
UNITE D'INSTALLATION ELECTRIQUE ENCASTREE COMPORTANT UNE ANTENNE

(30) Priorität: 19.03.1998 DE 19812185
(43) Veröffentlichungstag der Anmeldung: 03.01.2001
(73) Patentinhaber: HONEYWELL AG, 63067 Offenbach am Main (DE)
(72) Erfinder: JAUSS, Fritz, D-71101 Schönaich (DE); BIENERT, Renke, D-71101 Schönaich (DE)
(74) Vertreter: Leson, Thomas Johannes Alois, Dipl.-Ing.
(86) Internationale Anmeldenummer: PCT/EP1999/001161
(87) Internationale Veröffentlichungsnummer: WO 1999/048168

(56) Entgegenhaltungen:
- EP-A- 0 250 832
- EP-A- 0 669 672
- EP-A- 0 818 848
- DE-A- 2 753 662
- DE-A- 4 411 290
- DE-A- 19 817 587
- GB-A- 2 252 828

## Beschreibung

Die Erfindung betrifft eine elektrische Unterputz-Installationseinheit.

Installationseinheiten der eingangs genannten Art kommen bei einem Leitsystem für ein Gebäude bzw. für einen oder mehrere Räume eines Gebäudes zum Einsatz. Derartige Leitsysteme verfügen über mindestens eine Zentrale sowie über mindestens zwei über Funk mit der Zentrale in Verbindung stehende Komponenten. Derartige Leitsysteme dienen u.a. der Temperaturregelung.

Mit Hilfe der eingangs genannten Installationseinheit werden die Zentrale sowie die über Funk mit der Zentrale in Verbindung stehenden Komponenten des Leitsystems, z.B. an Wänden der hinsichtlich ihres Temperaturniveaus zu regelnden Räume, installiert. Eine derartige Installationseinheit muß daher eine einfache Installation einer Zentrale bzw. einer Komponente des Leitsystems ermöglichen.

In der Druckschrift DE 44 11 290 A1 ist eine Installationseinheit offenbart, insbesondere eine elektrische Unterputz-Installationseinheit in der Gestalt eines Unterputzsensors zur Montage von Alarmanlagenkomponenten mit einer gesonderten Antenne, die auf herkömmliche Art oder durch Aufdampfen auf der Rückseite einer Abdeckung aufgebracht ist.

Die Druckschrift GB 2 252 828 beschreibt einen Schlitz in einer Abdeckung für einen Wasserzähler, der als Antenne mitverwendet werden kann. Ähnliches ist in der Druckschrift DE 27 53 662 beschrieben.

Hiervon ausgehend liegt der vorliegenden Erfindung das Problem zugrunde, eine weiterentwickelte Installationseinheit für Leitsysteme bereitzustellen, die neuartige Funktionen ermöglicht.

Zur Lösung dieses Problems ist eine elektrische Unterputz-Installationseinheit nach Patentanspruch 1 bereitgestellt.

Weitere vorteilhafte Ausgestaltungen sind in den beigefügten abhängigen Ansprüchen aufgeführt.

Wie bereits erwähnt, steht mindestens eine Zentrale des Leitsystems für ein Gebäude über Funk mit weiteren Komponenten in Verbindung. Zwischen der Zentrale und den Komponenten werden demnach Signale übertragen. Dadurch, daß eine Baugruppe der Installationseinheit als Antenne ausgebildet ist, ist es möglich, daß die eigentlichen Sende- und Empfangseinrichtungen der mit Hilfe der Installationseinheit zu installierenden Zentrale bzw. Komponenten des Leitsystems keine separate Antenne aufweisen müssen. Die Antennenfunktion wird demnach unmittelbar von der Installationseinheit übernommen. Es ist demnach im Sinne der Erfindung, die Installationseinheit einer neuen Funktion zuzuführen. Die Installationseinheit dient demzufolge nicht mehr lediglich nur der Installation der Zentrale bzw. der Komponenten eines Leitsystems, vielmehr ist die Installationseinheit, insbesondere eine metallische oder metallisierte Tragplatte derselben, an der Signalübertragung zwischen der Zentrale und den Komponenten des Leitsystems beteiligt.

Bevorzugte Weiterbildungen der Erfindung ergeben sich aus den Unteransprüchen und der Beschreibung. Nachfolgend wird ein Ausführungsbeispiel der Erfindung anhand der Zeichnung näher erläutert. In der Zeichnung zeigen:
- Figur 1:: eine erfindungsgemäß ausgestaltete metallische Tragplatte einer erfindungsgemäßen Installationseinheit in Draufsicht,
- Figur 2:: die metallische Tragplatte gemäß Figur 1 im Querschnitt zusammen mit einer Folie zur elektrischen Anpassung der Tragplatte, und
- Figur 3:: ein elektrisches Ersatzschaltbild der erfindungsgemäßen Installationseinheit.

Die in der Zeichnung dargestellten Elemente einer Installationseinheit, nämlich einer elektrischen Unterputz-Installationseinheit, dienen der Installation einer Zentrale sowie von über Funk mit der Zentrale in Verbindung stehenden Komponenten eines Leitsystems. Zwischen der Zentrale und den Komponenten werden Signale übertragen.

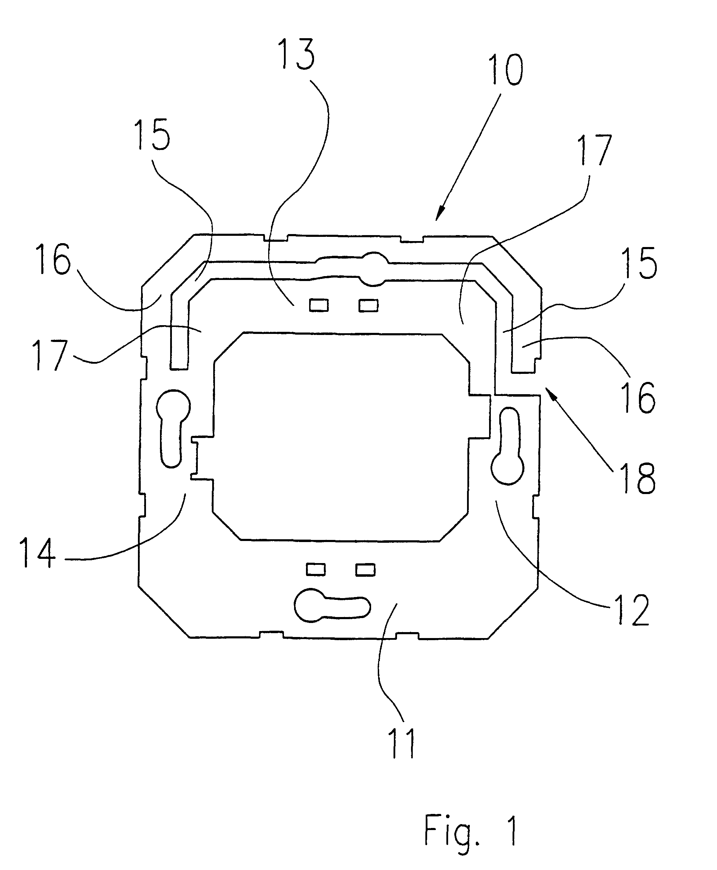

Eine elektrische Unterputz-Installationseinheit verfügt u.a. über eine metallische Tragplatte 10. Die metallische Tragplatte 10 ist gemäß Figur 1 als Rahmen ausgebildet. Der Rahmen wird von insgesamt vier Schenkeln 11, 12, 13, 14 gebildet. wobei einander gegenüberliegende Schenkel 11, 13 und 12, 14 parallel zueinander verlaufen, sowie benachbarte Schenkel 11, 12 und 12, 13 und 13, 14 und 14, 11 rechtwinkelig zueinander angeordnet sind. Die Schenkel 11, 12, 13, 14 der Tragplatte 10 bilden demzufolge einen in etwa rechteckig ausgestalteten Rahmen.

An Stelle der metallischen Tragplatte 10 kann auch eine metallisierte Tragplatte vorgesehen sein. Hierbei kann es sich z.B. um eine Tragplatte aus Kunststoff handeln, die zumindest bereichsweise mit einer metallischen Schicht versehen ist. So kann eine derartige Tragplatte aus Kunststoff z.B. metallisch bedampft sein. Im nachfolgenden wird der Einfachheit halber nur auf die metallische Tragplatte 10 Bezug genommen, wobei jedoch auch eine metallisierte Tragplatte verwendet werden kann.

Die metallische Tragplatte 10 der elektrischen Unterputz-Installationseinheit ist erfindungsgemäß als Antenne ausgebildet. Hierzu verfügt die als Rahmen ausgebildete metallische Tragplatte 10 über einen Schlitz 15, der sich zumindest bereichsweise entlang des Umfangs des Rahmens erstreckt.

Gemäß Figur 1 verläuft der Schlitz 15 mittig innerhalb der Schenkel 13 sowie 12, 14 der Tragplatte 10. Der Schlitz 15 erstreckt sich demnach über drei Schenkel, wobei er sich über die parallel zueinander verlaufenden Schenkel 12, 14 nur bereichsweise erstreckt. Über den die Schenkel 12, 14 verbindenden Schenkel 13 hingegen erstreckt sich der Schlitz 15 durchgehend.

Im Bereich des Schlitzes 15 werden demnach die Schenkel 12, 13 und 14 unterteilt, nämlich in einen Außenschenkel 16 sowie einen Innenschenkel 17.

Gemäß Figur 1 ist der Schlitz 15 in einem Abschnitt 18 der als Rahmen ausgebildeten metallischen Tragplatte 18 nach außen gerichtet. In diesem Abschnitt 18 durchbricht der Schlitz 15 den Rahmen, nämlich den Außenschenkel 16 des Schenkels 12, nach außen.

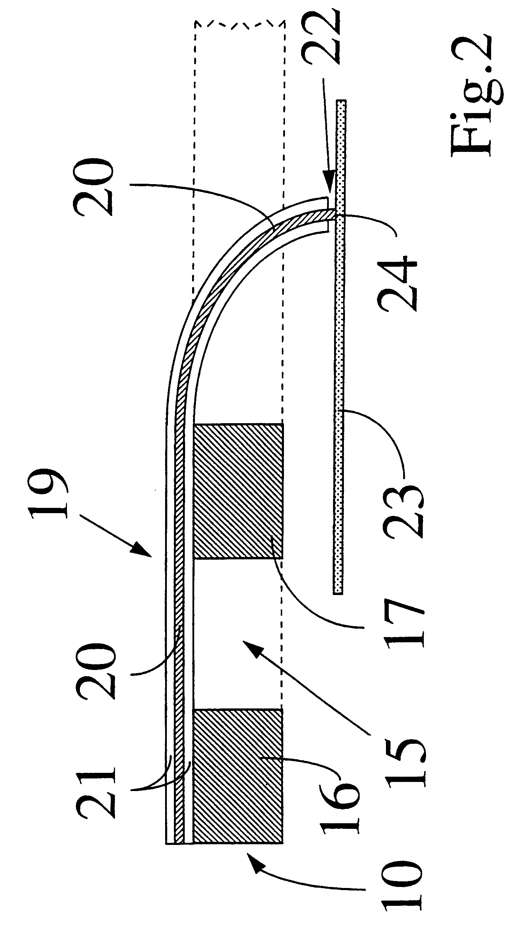

Eine derart ausgestaltete metallische Tragplatte erfüllt bereits die Funktion einer Antenne. Zur Anpassung der Antenne an die konkreten Erfordernisse, insbesondere zur Anpassung des komplexen Eingangswiderstands, ist gemäß Figur 2 der Tragplatte 10 eine Folie 19 zugeordnet. Die Folie 19 überdeckt den Schlitz 15 bereichsweise im Bereich des Schenkels 12, nämlich in unmittelbarer Nähe zum Abschnitt 18.

Erfindungsgemäß besteht die Folie 19 aus einer metallischen Schicht, nämlich einer Kupferschicht 20, die von zwei Isolatorschichten 21 umhüllt ist. Die Folie 19 liegt mit der unteren Isolatorschicht 21 auf dem Außenschenkel 16 sowie Innenschenkel 17 der Tragplatte 10 im Bereich des Schenkels 12 auf und überdeckt in diesem Bereich den Schlitz 15. Zwischen dem Außenschenkel 16 und der Folie 19 einerseits und dem Innenschenkel 17 und der Folie 19 andererseits wird jeweils ein Kondensator ausgebildet, mit Hilfe derer die als Antenne ausgebildete Tragplatte 10 elektrisch anpaßbar ist. Diese Anpassung kann einerseits über die Breite der Folie 19 erfolgen, sowie andererseits über die Dicke der Isolatorschichten 21 oder die Wahl des Materials der Isolatorschichten 21.

Gemäß Figur 2 liegt die Folie 19 auf dem Außenschenkel 16 sowie Innenschenkel 17 ohne elektrischen Kontakt auf. Im Bereich eines Endes 22 der Folie 19 ist die Kupferschicht 20 mit einer Leiterplatte 23 z.B. über Verlöten kontaktiert, wobei die Leiterplatte 23 Baugruppen einer Sende- und/oder Empfangseinrichtung tragen kann. Der Kontakt zwischen der Leiterplatte 23 und der Kupferfolie 20 ist in Figur 2 als Verbindungsstelle 24 dargestellt.

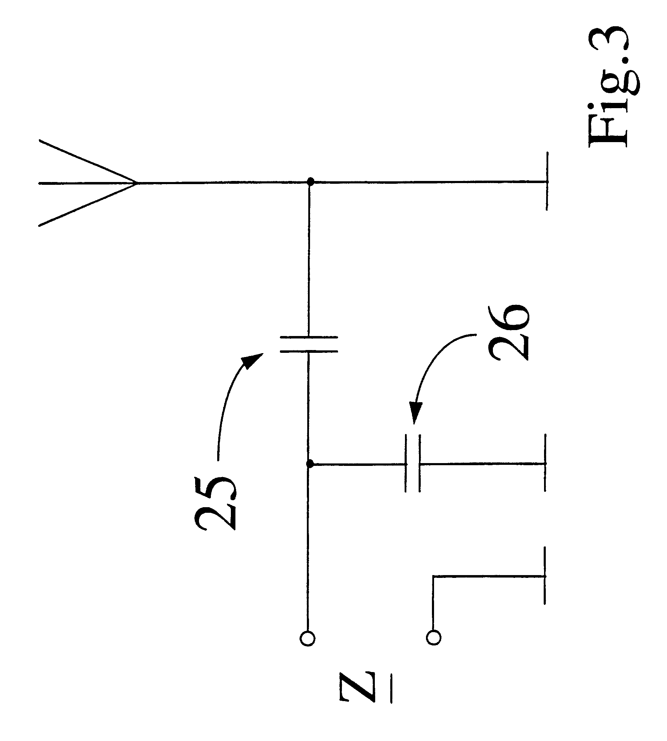

Figur 3 zeigt ein elektrisches Ersatzschaltbild der aus der metallischen Tragplatte 10 sowie aus der Folie 19 gebildeten Antenne mit Anpaßschaltung. Die Tragplatte 10 sowie die Folie 19 liegen gleichspannungsmäßig auf einem Masse- oder Erdpotential. Die zwischen dem Außenschenkel 16 und der Folie 19 einerseits sowie die zwischen dem Innenschenkel 17 und der Folie 19 andererseits ausgebildete Kapazität sind in Figur 3 als Kondensatoren 25, 26 dargestellt. Durch geeignete Auswahl des Materials der Isolatorschichten 21 kann die Kapazität der Kondensatoren 25, 26 angepaßt werden. Diese Anpassung kann auch über eine Modifikation der Dicke der Isolatorschichten 21 erfolgen. Des weiteren ist es möglich, die Breite der Überdeckung des Schlitzes 15 durch die Folie 19 anzupassen. Durch derartige Modifikationen ist der komplexe Eingangswiderstand Z der als Antenne wirkenden Einheit aus Tragplatte sowie Folie an die konkreten Erfordernisse anpaßbar. Idealerweise liegt der komplexe Eingangswiderstand Z bei 50 Ohm.

Die oben beschriebene Einheit aus der erfindungsgemäß ausgestalteten Tragplatte 10 sowie der Folie 19 arbeitet als verkürzte λ/4-Antenne bei einer Signal-Übertragungsfrequenz von 433 MHz.

In Abweichung zu dem dargestellten Ausführungsbeispiel ist es auch denkbar, daß eine nicht dargestellte Abdeckung der Installationseinheit als Antenne ausgebildet ist. So kann eine Schalter-, Taster- oder Bedieneinheit der Installationseinheit die Antennenfunktion übernehmen.

### Bezugszeichenliste:

- 10: Tragplatte
- 11: Schenkel
- 12: Schenkel
- 13: Schenkel
- 14: Schenkel
- 15: Schlitz
- 16: Außenschenkel
- 17: Innenschenkel
- 18: Abschnitt
- 19: Folie
- 20: Kupferschicht
- 21: Isolatorschicht
- 22: Ende
- 23: Leiterplatte
- 24: Verbindungsstelle
- 25: Kondensator
- 26: Kondensator

## Patentansprüche

1. Elektrische Unterputz-Installationseinheit, die eingerichtet ist, mit einem externen Gerät über Funk in Verbindung zu stehen, und zu diesem Zweck mit einer Antenne versehen ist,
**dadurch gekennzeichnet, dass** eine metallische oder metallisierte Baugruppe (10) der Installationseinheit derart ausgebildet ist, dass die metallische oder metallisierte Baugruppe (10) zugleich die Antennenfunktion übernimmt.

2. Elektrische Unterputz-Installationseinheit nach Anspruch 1, wobei die metallische oder metallisierte Baugruppe (10) eine Tragplatte der Installationseinheit ist.

3. Elektrische Unterputz-Installationseinheit nach Anspruch 1, wobei die metallische oder metallisierte Baugruppe (10) eine Abdeckung, eine Schaltereinheit, eine Tastereinheit oder eine Bedieneinheit der Installationseinheit ist.

4. Elektrische Unterputz-Installationseinheit nach einem der Ansprüche 1 bis 3, **dadurch gekennzeichnet, dass** die metallische oder metallisierte Baugruppe (10) als Rahmen ausgebildet ist, und dass der Rahmen mit einem sich zumindest bereichsweise entlang des Umfangs des Rahmens erstreckenden Schlitz (15) versehen ist.

5. Elektrische Unterputz-Installationseinheit nach Anspruch 4, **dadurch gekennzeichnet, dass** der Schlitz (15) in einem Abschnitt (18) des Rahmens nach außen gerichtet ist, derart, dass der Schlitz (15) den Rahmen in dem Abschnitt (18) durchbricht.

6. Elektrische Unterputz-Installationseinheit nach einem der Ansprüche 4 bis 5, **dadurch gekennzeichnet, dass** der Schlitz (15) bereichsweise überdeckt ist, insbesondere von einer Folie (19).

7. Elektrische Unterputz-Installationseinheit nach einem oder mehreren der Ansprüche 4 bis 6, **dadurch gekennzeichnet, dass** der Schlitz (15) bereichsweise von einer mehrschichtigen Folie (19) mit einer metallischen Schicht, insbesondere einer Kupferschicht (20), überdeckt ist.

8. Elektrische Unterputz-Installationseinheit nach Anspruch 7, **dadurch gekennzeichnet, dass** die Kupferschicht (20) von zwei Isolatorschichten (21) eingehüllt ist.

9. Elektrische Unterputz-Installationseinheit nach einem oder mehreren der Ansprüche 6 bis 8, **dadurch gekennzeichnet, dass** die Folie (19) den Schlitz (15) in unmittelbarer Nähe zu dem Abschnitt (18) überdeckt, in dem der Schlitz (15) den Rahmen durchbricht.

10. Elektrische Unterputz-Installationseinheit nach einem oder mehreren der Ansprüche 6 bis 9, **dadurch gekennzeichnet, dass** die Folie (19) elektrisch kontaktlos auf dem Rahmen aufliegt, wobei ein Ende (22) der Folie (19), insbesondere die Kupferschicht (20) der Folie (19), mit einer Leiterplatte (23) elektrisch verbunden ist.

## Claims

1. Electric flush-mounted installation unit intended to communicate by radio with an external appliance, and provided with an antenna for this purpose,
**characterized in that** a metallic or metallized structural component (10) of the installation unit is configured so that the metallic or metallized structural component (10) also assumes the function of the antenna.

2. Electric flush-mounted installation unit according to Claim 1 wherein the metallic or metallized structural component (10) is a base plate of the installation unit.

3. Electric flush-mounted installation unit according to Claim 1 wherein the metallic or metallized structural component (10) is a cover, switch unit, push-button unit or control unit of the installation unit.

4. Electric flush-mounted installation unit according to any one of Claims 1 to 3, **characterized in that** the metallic or metallized structural component (10) is configured as a frame, and **in that** the frame is provided with a slit (15) extending at least partly along the perimeter of the frame.

5. Electric flush-mounted installation unit according to Claim 4, **characterized in that** the slit (15) is directed outwards in one portion (18) of the frame so that the slit (15) breaches the frame **in that** portion (18).

6. Electric flush-mounted installation unit according to Claim 4 or Claim 5, **characterized in that** the slit (15) is partly covered, in particular by a foil (19).

7. Electric flush-mounted installation unit according to one or more of Claims 4 to 6, **characterized in that** the slit (15) is partly covered by a multilayer foil (19) with a metallic layer, in particular a copper layer (20).

8. Electric flush-mounted installation unit according to Claim 7, **characterized in that** the copper layer (20) is shrouded by two insulation layers (21).

9. Electric flush-mounted installation unit according to one or more of Claims 6 to 8, **characterized in that** the foil (19) covers the slit (15) in the immediate proximity of the portion (18) in which the slit (15) breaches the frame.

10. Electric flush-mounted installation unit according to one or more of Claims 6 to 9, **characterized in that** the foil (19) lies on the frame without electrical contact, one end (22) of the foil (19), in particular the copper layer (20) of the foil (19), being electrically connected to a printed circuit board.

## Revendications

1. Unité d'installation électrique encastrée qui est installée de manière à être reliée par radio à un appareil extérieur et qui est pourvue à cet effet d'une antenne,
**caractérisée en ce qu'**un sous-ensemble métallique ou métallisé (10) de l'unité d'installation est conçu pour assurer en même temps la fonction d'antenne.

2. Unité d'installation électrique encastrée selon la revendication 1, le sous-ensemble métallique ou métallisé (10) étant constitué par une plaque d'appui de ladite unité d'installation.

3. Unité d'installation électrique encastrée selon la revendication 1, le sous-ensemble métallique ou métallisé (10) étant constitué par un recouvrement, une unité de commutateur, une unité de bouton-poussoir ou une unité de manoeuvre de ladite unité d'installation.

4. Unité d'installation électrique encastrée selon l'une des revendications 1 à 3, **caractérisée en ce que** le sous-ensemble métallique ou métallisé (10) est conçu comme un cadre et **en ce que** ce cadre est pourvu d'une fente (15) qui s'étend au moins par zones le long de la circonférence du cadre.

5. Unité d'installation électrique encastrée selon la revendication 4, **caractérisée en ce que** la fente (15), dans une section (18) du cadre, est dirigée vers l'extérieur de telle sorte qu'elle perce le cadre dans ladite section (18).

6. Unité d'installation électrique encastrée selon l'une des revendications 4 à 5, **caractérisée en ce que** la fente (15) est couverte par zones, en particulier par un film (19).

7. Unité d'installation électrique encastrée selon l'une au moins des revendications 4 à 6, **caractérisée en ce que** la fente (15) est couverte par zones par un film multicouche (19) comportant une couche métallique, en particulier une couche de cuivre (20).

8. Unité d'installation électrique encastrée selon la revendication 7, **caractérisée en ce que** la couche de cuivre (20) est enrobée par deux couches isolantes (21).

9. Unité d'installation électrique encastrée selon l'une au moins des revendications 6 à 8, **caractérisée en ce que** le film (19) couvre la fente (15) à proximité immédiate de la section (18) dans laquelle ladite fente (15) perce le cadre.

10. Unité d'installation électrique encastrée selon l'une au moins des revendications 6 à 9, **caractérisée en ce que** le film (19) est posé sur le cadre sans contact électrique, une extrémité (22) du film (19), en particulier la couche de cuivre (20) du film (19), étant reliée électriquement à la carte imprimée (23).
